# EUROPÄISCHE PATENTSCHRIFT

(11) **EP 3 529 565 B1**
(45) Veröffentlichungstag und Bekanntmachung des Hinweises auf die Patenterteilung: **08.12.2021**
(21) Anmeldenummer: 17780307.9
(22) Anmeldetag: 04.10.2017
(51) Int. Cl.: G01D 21/00

(54) **BAUKASTEN ZUM BAU EINER MESSVORRICHTUNG**
CONSTRUCTION KIT FOR CONSTRUCTION OF A MEASUREMENT DEVICE
SYSTÈME MODULAIRE POUR LA CONSTRUCTION D'UN DISPOSITIF DE MESURE

(30) Priorität: 21.10.2016 DE 102016012567
(43) Veröffentlichungstag der Anmeldung: 28.08.2019
(73) Patentinhaber: Testo SE & Co. KGaA, 79822 Titisee-Neustadt (DE)
(72) Erfinder: BACH, Sebastian, 79874 Breitnau (DE); MÜNZER, Markus, 78183 Hüfingen (DE); SCHOTT, Stefan, 79235 Oberbergen (DE); SCHÜLER, Katharina, 79106 Freiburg (DE)
(74) Vertreter: Mertzlufft-Paufler, Cornelius
(86) Internationale Anmeldenummer: PCT/EP2017/001168
(87) Internationale Veröffentlichungsnummer: WO 2018/072864

(56) Entgegenhaltungen:
- EP-A1- 2 725 326
- EP-A1- 2 908 102
- WO-A1-2004/017025
- DE-A1-102007 053 833
- DE-A1-102011 001 214
- DE-A1-102014 106 935
- US-A1- 2015 168 185
- ZF Switches & Sensors: "Cherry's modular sensor kit", youtube, 6. November 2014 (2014-11-06), Seite 1 pp., XP054977912, Gefunden im Internet: URL:https://www.youtube.com/watch?v=5kg6sJ Xp09M [gefunden am 2017-11-23] & Zf Switches & Sensors: "Cherry's Modular Sensor Kit - Options", , 6. November 2014 (2014-11-06), XP055427935, Gefunden im Internet: URL:https://www.youtube.com/watch?v=5kg6sJ Xp09M [gefunden am 2017-11-22]

## Beschreibung

Die Erfindung befasst sich mit Messvorrichtungen, insbesondere mobile Handgeräte, zur Messung einer Messgröße.

Solche Messvorrichtungen weisen üblicherweise einen Sensor zur Erfassung einer physikalischen oder chemischen Messgröße und eine Schnittstelle zur Übertragung des Messwertes an eine Auswerteeinheit. Diese Auswerteeinheit kann in die Messvorrichtung integriert sein. Es kann auch eine Anzeigeeinheit zur Darstellung des Messwertes integriert sein. Eine solche Messvorrichtung kann als kompaktes Handgerät ausgebildet sein, so dass es an verschiedenen Messorten flexibel einsetzbar ist.

Nachteilig ist bei einem solchen Handgerät, dass bei einem Defekt einer Funktionseinheit, etwa dem Sensor oder der Schnittstelle, das ganze Gerät ausfällt und zur Reparatur beispielsweise zum Hersteller geschickt werden muss. Ebenso muss zur Kalibrierung des Sensors das ganze Gerät weggegeben werden. In dieser Zeit ist eine Messung nur mit einem Ersatzgerät möglich.

Aus der WO 2004/017025 A1 ist ein Baukasten bekannt der zumindest eine Auswerteeinheit, eine Kommunikationseinheit und mehrere Sensoreinheiten umfasst, die zu einer Messvorrichtung zusammengefügt werden können, in dem einzelne Einheiten in ein Gehäuse eingefügt werden.

Aus der EP 2 725 326 A1 ist ein Sensor bekannt, der an einem Montagerumpf befestigbar ist, wobei zwischen Sensor und Montagerumpf eine teleskopartig ausziehbare Aufnahmeeinrichtung angeordnet ist.

Aufgabe der Erfindung ist es eine Messvorrichtung zu schaffen, die flexibler einsetzbar ist und weniger Ausfallzeiten aufweist.

Diese Aufgabe wird durch einen Baukasten zum Bau einer Messvorrichtung mit den Merkmalen des Anspruch 1 gelöst.

Der erfindungsgemäße Baukasten zum Bau einer Messvorrichtung umfasst zumindest zwei Sensoreinheiten, die jeweils zur Messung unterschiedlicher physikalischer oder chemischer Größen ausgestaltet sind, und zumindest zwei Kommunikationseinheiten, die jeweils unterschiedliche Schnittstellen zur Datenübertragung aufweisen, wobei jede der Sensoreinheiten mit jeder der Kommunikationseinheiten des Baukastens über eine mechanische Kupplung lösbar verbindbar ist und zumindest eine Verlängerungseinheit mit einem Gehäuse, das beidseits mechanische Kupplungen aufweist, an die wahlweise eine Sensoreinheit, eine Kommunikationseinheit und/oder eine weitere Verlängerungseinheit koppelbar ist, wobei das Gehäuse eine Teleskopanordnung aufweist, mit der die Verlängerungseinheit in ihrer Längsausdehnung veränderbar ist.

Die Idee der Erfindung ist eine Trennung der verschiedenen Funktionseinheiten einer Messvorrichtung in getrennte, modular zusammenfügbare Einheiten. Eine Messvorrichtung kann daher aus verschiedenen Modulen des Baukastens zusammengefügt werden. In dem Baukasten stehen wenigstens zwei Sensoreinheiten zur Verfügung, die jeweils zur Erfassung einer anderen physikalischen oder chemischen Messgröße ausgebildet sind. Solche Messgrößen können beispielsweise Temperatur, Strömungsgeschwindigkeit oder eine Gaskonzentration sein.

Weiterhin stehen im Baukasten wenigstens zwei Kommunikationseinheiten bereit, die jeweils unterschiedliche Schnittstellen aufweisen, über die die Messergebnisse übertragen werden können. Mögliche Schnittstellen sind hier beispielsweise drahtlose Schnittstellen wie WLAN, Bluetooth, Zigbee, NFC oder dergleichen. Die Schnittstelle kann aber auch drahtgebunden sein und beispielsweise zur Verbindung mit einem Feldbus, etwa Ethernet, Modbus, Profibus, oder dergleichen ausgebildet sein.

Der Vorteil der Erfindung besteht nun darin, dass die Sensoreinheiten und die Kommunikationseinheiten des Baukastens beliebig miteinander kombinierbar sind, so dass jeweils ein an die benötigte Umgebung angepasste Messvorrichtung zusammensteckbar ist. Die Verbindung der einzelnen Module erfolgt dabei über eine mechanische Kupplung.

Der weitere Vorteil besteht darin, dass in einem Einsatzszenario zur Messung verschiedener Messgrößen beispielsweise nur eine Kommunikationseinheit benötigt wird, die mit verschiedenen Sensoreinheiten zur Messung verschiedener Messgrößen bestückt werden kann.

Der modulare Aufbau hat noch den weiteren Vorteil, dass bei einem Defekt einer Sensoreinheit nur diese Sensoreinheit getauscht werden muss. Ebenso muss für eine Kalibrierung der Sensoreinheit nur diese Sensoreinheit weg gegeben werden. In jedem Fall kann mit einer anderen Sensoreinheit weitergemessen werden.

Der modulare Aufbau der Messvorrichtung hat auch den Vorteil, dass die Teileanzahl, der Entwicklungsaufwand und der Testaufwand reduziert sind.

In einer Weiterbildung der Erfindung umfasst der Baukasten zumindest eine Sensoreinheit, die zur Messung von zumindest zwei unterschiedlichen physikalischen Größen ausgestaltet ist und/oder zumindest eine Kommunikationseinheit, die zumindest zwei unterschiedliche Schnittstellen zur Datenübertragung aufweist.

In einer vorteilhaften Ausführung der Erfindung sind die Schnittstellen der Kommunikationseinheiten zur Herstellung einer drahtlosen und/oder drahtgebundenen Verbindung ausgestaltet. Insbesondere vorzugsweise wobei eine oder die drahtlosen Schnittstellen dazu eingerichtet ist/sind, um jeweils eine oder mehrere Drahtlosverbindungen ausgewählt aus der Gruppe aus WLAN, Bluetooth und/oder Zigbee herzustellen und/oder wobei eine oder die drahtgebundenen Schnittstellen als ein Anschluss für ein Datenübertragungskabel oder als ein Datenübertragungskabel ausgestaltet ist/sind.

Bei der Erfindung ist es zweckmäßig, wenn eine Sensorelektronik in einem Gehäuse der Sensoreinheit und/oder in einem Gehäuse der Kommunikationseinheit angeordnet ist und/oder dass eine Kommunikationselektronik in einem Gehäuse der Sensoreinheit und/oder in einem Gehäuse der Kommunikationseinheit angeordnet ist. Insbesondere zweckmäßig ist es, wenn eine Sensorelektronik in der Sensoreinheit und eine Kommunikationselektronik in der Kommunikationseinheit angeordnet sind. Auf diese Weise ist eine besonders kostengünstige Ausgestaltung der erfindungsgemäßen Module möglich.

Die mechanische Kupplung zwischen einer Sensoreinheit und einer Kommunikationseinheit ist vorzugsweise so ausgebildet, dass sie eine sichere und feste mechanische Verbindung herstellt und schnell und einfach herstellbar und wieder lösbar ist. Auf diese Weise ist ein einfacher und bequemer Austausch der Module möglich. Insbesondere zweckmäßig ist es dabei, wenn die mechanische Kupplung als Steckkupplung, Schraubkupplung, Rastverbindung, Klemmverbindung und/oder Reibverbindung ausgestaltet ist.

Prinzipiell ist es vorteilhaft, wenn jede durch den Baukasten zusammenbaubare Messvorrichtung einen Handgriff aufweist. Der Handgriff erlaubt eine einfache und sichere Handhabung der Messvorrichtung. Der Handgriff kann dabei als separates Modul ausgebildet sein, das ebenfalls über eine mechanische Kupplung mit einer Sensoreinheit oder einer Kommunikationseinheit verbindbar ist. Insbesondere vorteilhaft ist es, wenn der Handgriff durch ein oder das Gehäuse der Sensoreinheit und/oder durch ein oder das Gehäuse der Kommunikationseinheit ausgestaltet und/oder daran angeordnet ist. Auf diese Weise ist eine separate Handgriffeinheit nicht notwendig. Der Handgriff kann beispielsweise durch eine Gummierung gebildet sein.

Die von der Sensoreinheit erfassten Messwerte werden über die Kommunikationseinheit an eine Verarbeitungs- oder Anzeigeeinheit übertragen. Dabei kann es vorteilhaft sein, zumindest eine Kommunikationseinheit und/oder zumindest eine Sensoreinheit des Baukastens eine Anzeigeeinheit zum Anzeigen eines Messwertes aufweist. Auf diese Weise kann der Messwert sofort an der Messvorrichtung eingesehen und kontrolliert werden.

Unabhängig davon ist es auch vorteilhaft, wenn zumindest eine Kommunikationseinheit und/oder zumindest eine Sensoreinheit des Baukastens eine Verarbeitungseinheit zur Messwertaufbereitung aufweist. Die Messwertaufbereitung kann dabei beispielsweise die Berechnung abhängiger Werte, das Speichern und/oder Verknüpfen mit anderen Messwerten beinhalten.

Die mechanische Kupplung zwischen einer Sensoreinheit und einer Kommunikationseinheit benötigt auch eine elektrische Verbindung zur Übertragung der Messwerte von der Sensoreinheit an die Kommunikationseinheit. Dabei ist es besonders vorteilhaft, wenn die Sensoreinheiten und die Kommunikationseinheiten über eine Steckkupplung miteinander lösbar verbindbar sind. Die Steckkupplung kann dabei sowohl die elektrische und auch die mechanische Verbindung bereitstellen, so dass die Kupplung besonders einfach handhabbar ist.

Dabei kann entweder die Sensoreinheiten einen Stecker und die Kommunikationseinheiten eine zum Stecker korrespondierende Buchse aufweisen oder die Kommunikationseinheiten einen Stecker und die Sensoreinheiten eine zum Stecker korrespondierende Buchse aufweisen.

Dabei ist es weiterhin wichtig, dass zur elektrischen Kommunikation zwischen den Sensoreinheiten und den Kommunikationseinheiten ein einheitliches Datenprotokoll eingesetzt ist. Die strikte Einhaltung dieses Protokolls stellt eine beliebige Kombinationsmöglichkeit sicher. Bei diesem Datenprotokoll kann beispielsweise neben dem Messwert auch eine Messgröße übertragen werden. Das ermöglicht eine Messwertauswertung ohne vorher den aktuell verwendeten Sensor zu kennen.

Eine aus dem Baukasten zusammengebaute Messvorrichtung kann sofort einsetzbar sein. Dazu können die einzelnen Module, insbesondere die Sensoreinheit und/oder die Kommunikationseinheit Konfigurationsdaten aufweisen, die beim Zusammenbauen ausgetauscht werden. Auf diese Weise kann beispielsweise eine Kommunikationseinheit erkennen, mit welcher Sensoreinheit sie gerade verbunden ist.

In einer Weiterbildung der Erfindung kann der Baukasten ein auf einem Datenverarbeitungsgerät installierbares Computerprogrammprodukt, insbesondere eine App, umfassen, mittels welchem Computerprogrammprodukt eine Datenübertragung an das Datenverarbeitungsgerät und/oder eine Konfiguration einer aus dem Baukasten zusammengebauten Messvorrichtung, insbesondere der Sensoreinheit und/oder der Kommunikationseinheit, durchführbar ist. Auf diese Weise kann auf bequeme Weise eine Messvorrichtung eingerichtet und in Betrieb genommen werden. Darüber hinaus ist auch eine Übertragung der Messwerte an dieses Computerprogrammprodukt möglich. Somit steht mit dem Computerprogrammprodukt eine Möglichkeit zur Verfügung, Messwerte zu verarbeiten, zu speichern und/oder zu verknüpfen. Zudem können die vorhandenen Sensoreinheiten damit verwaltet werden, so dass eventuell notwendige Kalibrierungen terminiert und angezeigt werden können.

Bei einer Sensoreinheit ist ein Sensor in einem Gehäuse angeordnet, wobei das Gehäuse eine mechanische Kupplung zum Ankoppeln einer weiteren Einheit zum Bilden einer Messvorrichtung aufweist. Wobei die weitere Einheit insbesondere Teil eines erfindungsgemäßen Baukastens ist. Die gebildete Messvorrichtung kann Teil einer Baureihe sein.

Eine Kommunikationseinheit weist wenigstens eine Kommunikationsschnittstelle zum Datenaustausch mit einem externen Gerät und ein Gehäuse auf, wobei das Gehäuse eine mechanische Kupplung zum Ankoppeln einer weiteren Einheit zum Bilden einer Messvorrichtung aufweist. Wobei die weitere Einheit insbesondere Teil eines erfindungsgemäßen Baukastens ist. Die gebildete Messvorrichtung kann Teil einer Baureihe sein.

Erfindungsgemäß weist der Baukasten wenigstens eine Verlängerungseinheit mit zwei mechanischen Kupplungen auf, wobei die Verlängerungseinheit zwischen eine Sensoreinheit und/oder eine Kommunikationseinheit und/oder eine oder zwei weitere Verlängerungseinheiten koppelbar ist und/oder wobei wenigstens eine zweipolige Verbindungsleitung zwischen den Kupplungen mit drehsymmetrischen elektrischen Verbindungsmitteln, insbesondere einem Klinkenstecker und/oder einer Klinkenbuchse.

Die Verlängerungseinheit wird bevorzugt zwischen eine Sensoreinheit und eine Kommunikationseinheit gekoppelt, um beispielsweise die Gesamtlänge der Messvorrichtung und/oder die Reichweite des Sensors zu vergrößern. Dazu weist die Verlängerungseinheit mechanische Kupplungen auf, die zu den Kupplungen der Sensoreinheit und der Kommunikationseinheit passen. Die Kupplungen können beispielsweise jeweils einen Bajonettverschluss aufweisen, mit dem die Einzelteile mechanisch fest und lösbar miteinander verbindbar sind.

Dabei kann die Verlängerungseinheit jeweils eine Buchse und einen Stecker aufweisen, die zu dem Stecker der Sensoreinheiten beziehungsweise der Buchse der Kommunikationseinheiten passen oder zu dem Stecker der Kommunikationseinheiten beziehungsweise der Buchse der Sensoreinheiten.

Neben der mechanischen Kupplung besitzt die Verlängerungseinheit auch eine elektrische Kupplung, so dass zwischen Sensoreinheit und Kommunikationseinheit auch bei zwischengekoppelter Verlängerungseinheit eine elektrische Verbindung besteht. Im Inneren der Verlängerungseinheit erfolgt die Signalleitung über ein Kabel.

Die elektrische Schnittstelle kann beispielsweise in Form von Klinkersteckern ausgebildet sein, die eine Rotierbarkeit ermöglichen und die die elektrische Verbindung zwischen Sensoreinheit und Kommunikationseinheit herstellen. Die elektrische Schnittstelle kann gleichzeitig die mechanische Kupplung bilden.

Vorzugsweise sind die Klinkenstecker zentrisch angeordnet, um ein Verdrehen zur Betätigung eines Bajonettverschlusses zu ermöglichen.

Erfindungsgemäß sieht die Verlängerungseinheit ein Teleskopsystem vor, welches zwischen einer eingefahrenen und einer ausgeschobenen Position überführbar ist. Dabei kann eine Längenverstellung stufenlos oder beispielsweise in diskreten Raststufen erfolgen. Um eine ungewollte Längenänderung zu verhindern, kann die Verlängerungseinheit eine Fixiervorrichtung aufweisen, mit der beispielsweise die ausgeschobene Position feststellbar ist. Die Fixiervorrichtung kann beispielsweise durch Drehen um die Längsachse aktivierbar sein.

Bei dieser Ausführung kann es zweckmäßig sein, wenn das Kabel im Inneren als Wendelleitung ausgebildet ist, welche spiralförmig verläuft und ein Verstauchen des überschüssigen Leitungsabschnitts im zusammengefahrenen Zustand im Inneren ermöglicht.

In einer zweiten Alternative ist vorgesehen, dass die Verlängerungseinheit nahezu beliebig mit sich selbst kombinierbar ist. Hierzu sind auf beiden Seiten mechanische Kupplungen vorgesehen, die spiegelbildlich korrespondierend zueinander ausgebildet sind. Auf diese Weise können mehrere Verlängerungseinheiten aneinander gekoppelt werden, um so eine gewünschte oder erforderliche Länge zu erreichen.

Aus mehreren Messvorrichtungen kann eine Baureihe gebildet sein, wobei jede Messvorrichtung zumindest eine Sensoreinheit und zumindest eine Kommunikationseinheit aufweist, und wobei die einzelnen Messvorrichtungen der Baureihe mit dem erfindungsgemäßen Baukasten hergestellt oder zusammengebaut sind, insbesondere wobei wenigstens zwei Messvorrichtungen übereinstimmende Sensoreinheiten und voneinander abweichende Kommunikationseinheiten aufweisen.

Die Erfindung ist nachfolgend anhand von Ausführungsbeispielen mit Bezug auf die beiliegenden Zeichnungen näher erläutert.

Es zeigt:
- Fig. 1: eine schematische Darstellung von verschiedenen Sensoreinheiten eines erfindungsgemäßen Baukastens,
- Fig. 2: eine schematische Darstellung von verschiedenen Kommunikationseinheiten eines erfindungsgemäßen Baukastens,
- Fig. 3: eine Messvorrichtung mit einer Sensoreinheit und einer über ein Kabel verbundene Kommunikationseinheit mit einer Anzeigeeinheit,
- Fig. 4: eine Messvorrichtung mit jeweils einer Kommunikationseinheit und einer Sensoreinheit,
- Fig. 5: eine Messvorrichtung mit einer Sensoreinheit und einer Kommunikationseinheit und einem Smartphone,
- Fig. 6: eine schematische Darstellung von verschiedenen Verlängerungseinheiten eines erfindungsgemäßen Baukastens,
- Fig. 7: eine Messvorrichtung mit einer Teleskop-Verlängerungseinheit und
- Fig. 8: eine Messvorrichtung mit mehreren Verlängerungseinheiten.

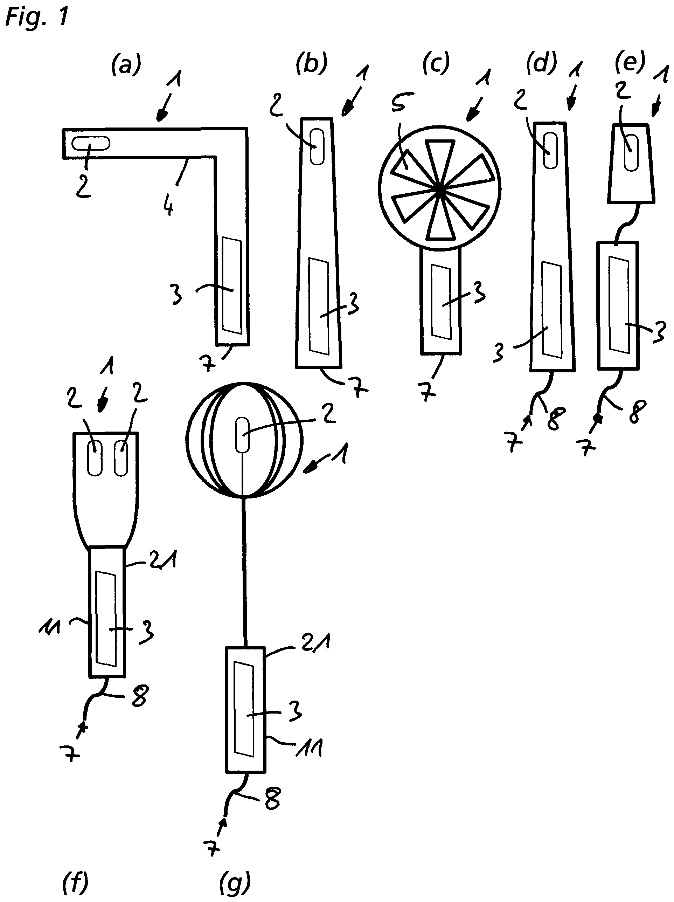

Die Fig. 1 zeigt exemplarisch mehrere Sensoreinheiten 1 des erfindungsgemäßen Baukastens. Die Sensoreinheiten 1 weisen im Beispiel jeweils einen Sensor 2 und eine dazu passende Sensorelektronik 3 auf. Dabei sind die Sensoreinheiten 1 zur Erfassung unterschiedlicher physikalischer und/oder chemischer Messgrößen eingerichtet.

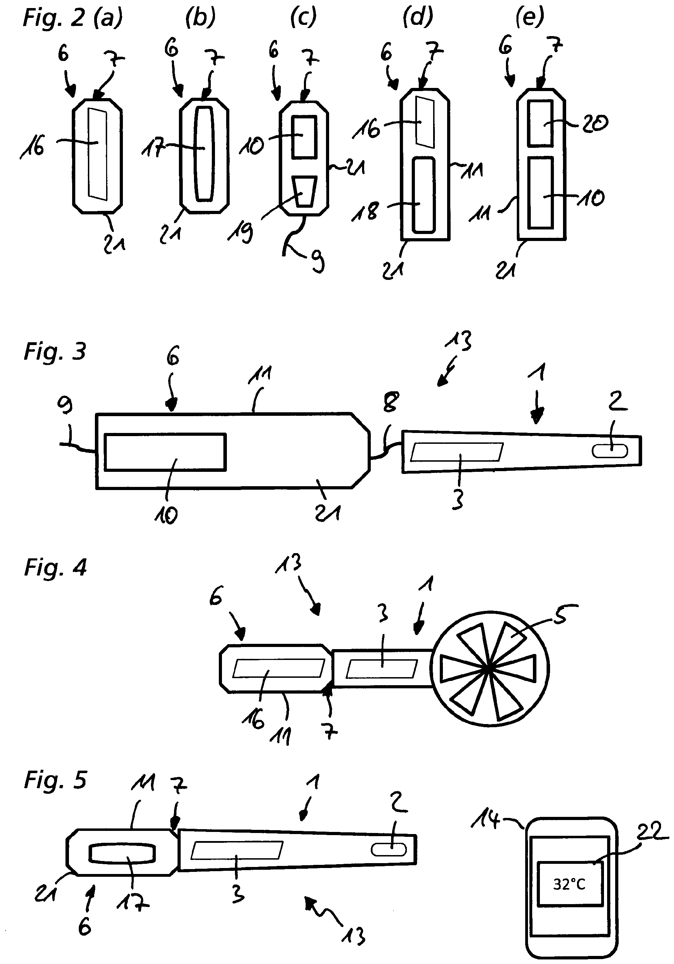

Die Fig. 1(a) zeigt beispielsweise eine Sensoreinheit 1, beispielsweise zur Temperaturmessung, mit einem abgewinkelten Schaft 4. Fig. 1(b) zeigt eine Sensoreinheit 1 mit einem geraden Schaft 4. Fig. 1(c) zeigt beispielhaft eine Sensoreinheit 1 mit einem Strömungssensor mit einem Flügelrad 5. Die Sensoreinheiten (a) bis (c) besitzen eine integrierte mechanische Kupplung 7, mit der die Sensoreinheit 1 mit einer Kommunikationseinheit 6 (siehe Fig. 2) verbindbar ist. Fig. 1(d) zeigt eine zur Fig. 1(b) ähnliche Sensoreinheit 1. Die Fig. 1(e) zeigt eine zweiteilige Sensoreinheit, bei der der Sensor und die Sensorelektronik jeweils in einem separaten, durch ein Verbindungskabel verbundenes Gehäuse angeordnet sind. Fig. 1(f) zeigt eine weitere Sensoreinheit 1, die jedoch zwei Sensoren 2 zur Erfassung unterschiedlicher physikalischer und/oder chemischer Größen aufweist. Schließlich zeigt Fig. 1(g) eine Sensoreinheit 1 zur Erfassung von Feuchtigkeit, beispielsweise in einem Mauerwerk. Die Sensoreinheiten (d) bis (g), besitzen jeweils ein Kabel 8 mit der die Sensoreinheit 1 mechanisch und elektrisch mit einer Kommunikationseinheit 6 koppelbar ist.

Die gezeigte Auswahl an Sensoreinheiten dient hier nur zur Verdeutlichung, dass der Baukasten viele verschiedene Sensoreinheiten aufweisen kann. Die Erfindung ist daher in keiner Weise auf die gezeigte Auswahl, die gezeigte Anzahl oder die gezeigten Sensortypen beschränkt.

Die Fig. 2 zeigt exemplarisch mehrere Kommunikationseinheiten 6 des erfindungsgemäßen Baukastens. Die Kommunikationseinheiten 6 weisen jeweils eine Kommunikationselektronik 15 auf, die je nach Schnittstelle unterschiedlich ausgebildet sein kann. Weiterhin weist jede Kommunikationseinheit 6 eine Kupplung 7 zum Ankoppeln einer Sensoreinheit 1 auf. Wobei diese Kupplung 7 sowohl zum direkten Ankoppeln einer Sensoreinheit 1 als auch zum Ankoppeln eines Kabels 8 einer Sensoreinheit 1 ausgebildet ist. Zu diesem Zweck weisen die Kommunikationseinheiten 6 jeweils eine Buchse mit Steckkontakten (nicht gezeigt) auf, in die ein passender Stecker mit Steckkontakten (nicht gezeigt) einsetzbar ist, der entweder fest an der Sensoreinheit 1 oder an einem Kabel 8 der Sensoreinheit 1 angeordnet ist. Es kann jedoch auch umgekehrt an den Kommunikationseinheiten 6 jeweils ein Stecker angeordnet sein, der in eine Buchse der Sensoreinheit 1 oder des Kabels 8 passt.

Die Kommunikationseinheit 6 der Fig. 2(a) ist beispielsweise zur drahtlosen Kommunikation mit einem Bluetooth-Modul ausgebildet. Während die Kommunikationseinheit 6 der Fig. 2(b) drahtlos über ein Zigbee-Modul 17 kommunizieren kann.

Die Kommunikationseinheit 6 der Fig. 2(c) weist hingegen ein Bus-Modul 19 auf, zur drahtgebundenen Kommunikation über ein Kabel 9 mit einem Bus. Zusätzlich weist die Kommunikationseinheit 6 eine Anzeigeeinheit 10 zum Darstellen von Messwerten auf.

Die Kommunikationseinheit 6 der Fig. 2(d) besitzt hingegen zwei unabhängige Kommunikationsschnittstellen, ein WLAN-Modul 18 und ein Bluetooth-Modul 16 zur drahtlosen Kommunikation.

Die Kommunikationseinheit der Fig. 2(d) weist keine Schnittstelle zur Kommunikation nach außen auf. Sie besitzt eine Anzeigeeinheit 10 zur Anzeige von Messwerten und eine Verarbeitungseinheit 20 zur Verarbeitung von Messwerten. Eine solche Verarbeitung kann beispielsweise das Bilden eines Mittelwertes aus mehreren Messwerten, oder das Verknüpfen von zwei verschiedenen Messgrößen von zwei Sensoren einer Sensoreinheit wie in Fig. 1(f) oder andere mathematische oder statistische Berechnungen beinhalten. Der verarbeitete Wert kann dann in der Anzeigeeinheit 10 angezeigt werden.

Auch hier gilt, dass die gezeigte Auswahl an Kommunikationseinheiten nur zur Verdeutlichung des Baukastenprinzips dient. Die Erfindung ist daher weder auf die gezeigte Anzahl oder die beschriebenen Schnittstellen beschränkt ist. Selbstverständlich kann eine Kommunikationseinheit eine beliebige bekannte Schnittstelle aufweisen oder auch eine beliebige Kombination aus bekannten Schnittstellen.

Der erfindungsgemäße Baukasten ist nun aus wenigstens zwei verschiedenen Sensoreinheiten 1 und wenigstens zwei verschiedenen Kommunikationseinheiten 6 und zumindest einer Verlängerungseinheit 12 gebildet. Eine Messvorrichtung kann nun durch Zusammenbauen einer Sensoreinheit 1 und einer Kommunikationseinheit 6 hergestellt werden.

Zur besseren und einfacheren Handhabung der Messvorrichtung kann eine Sensoreinheit 1 und/oder eine Kommunikationseinheit 6 einen Handgriff 11 aufweisen. Der Handgriff 11 kann beispielsweise durch ein Gehäuse 21 einer Sensoreinheit 1 und/oder einer Kommunikationseinheit 6 gebildet sein. Das Gehäuse 21 kann dazu beispielsweise eine Gummierung oder andere Griffteile aufweisen, die mit dem Gehäuse 21 verbunden sind.

Die Fig. 3 bis 5 zeigen nun exemplarisch verschiedene Messvorrichtungen, die mit dem Baukasten zusammenbaubar sind. Die Messvorrichtung 13 in Fig. 3 weist beispielsweise eine Sensoreinheit 1 nach Fig. 1(b) und eine Kommunikationseinheit 6 nach Fig. 2(c) auf.

Bei der Messvorrichtung 13 in Fig. 4 ist eine Sensoreinheit 1 nach Fig. 1(c) mit einer Kommunikationseinheit 6 nach Fig. 2(a) zusammengebaut.

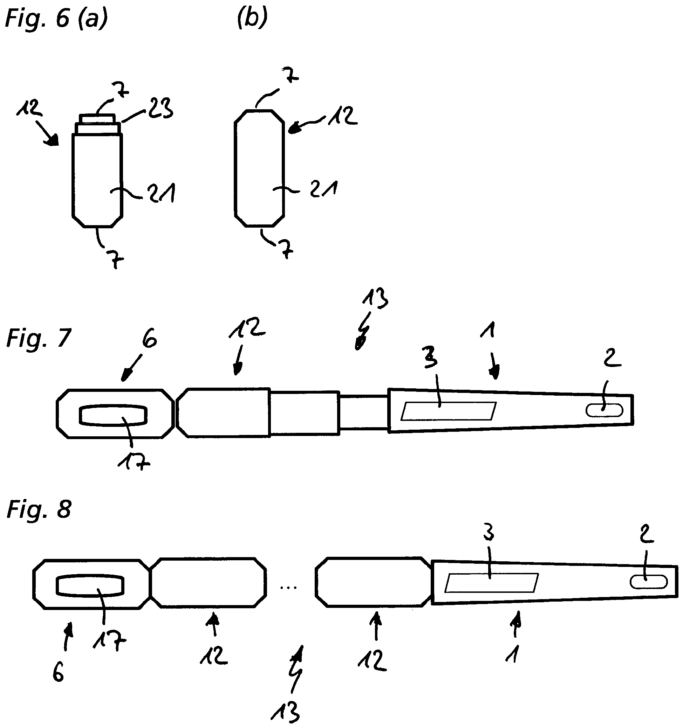

Die Messvorrichtung 13 in Fig. 5 besteht aus einer Sensoreinheit 1 nach Fig. 1(d) und einer Kommunikationseinheit 6 nach Fig. 2(b). Zusätzlich zeigt die Fig. 6 ein Smartphone 14 oder ein Tablet, auf dem ein Computerprogramm geladen ist, das mit der Kommunikationseinheit 6 in Verbindung steht. Das Computerprogramm 22 ist beispielsweise dazu eingerichtet, die Messvorrichtung 13 zu konfigurieren und/oder Messwerte anzuzeigen und/oder Messwerte anderweitig zu verarbeiten. Im Beispiel zeigt das Computerprogramm 22 eine Temperatur, des Sensors 2 der Sensoreinheit 1.

Unter bestimmten Messsituationen kann es notwendig sein, die Messvorrichtung zu verlängern. Dazu beinhaltet der erfindungsgemäße Baukasten eine oder mehrere Verlängerungseinheiten 12. Die Fig. 6 zeigt eine schematische Darstellung von verschiedenen Verlängerungseinheiten 12 eines erfindungsgemäßen Baukastens. Die Verlängerungseinheit 12 der Fig. 6 (a) weist eine Teleskopanordnung 23 auf, die eine stufenlose Längenänderung erlaubt. Zur Verbindung mit anderen Bausatzelementen weist die Verlängerungseinheit 12 beidseitig mechanische Kupplungen 7 auf, die eine Kopplung an Sensor- und Kommunikationseinheiten ermöglicht.

Die Teleskopanordnung 23 kann zudem Mittel zum Fixieren der Teleskopstellung aufweisen, so dass sich im Betrieb die Länge nicht verstellt. Diese Fixierung kann beispielsweise durch eine innenliegende Klemmung erfolgen, die durch Drehung des vordersten Teleskopsegments betätigbar ist.

Die Verlängerungseinheit 12 der Fig. 6 (b) weist hingegen eine feste Länge auf. Die mechanischen Kupplungen 7 an ihren Enden sind so ausgebildet, dass sie nicht nur zur Kopplung mit Sensor- und Kommunikationseinheiten geeignet sind. Sondern auch zum Koppeln mit weiteren identischen oder anderen Verlängerungseinheiten 12. So können zwei oder mehrere dieser Verlängerungseinheiten 12 miteinander verbunden werden, um eine gewünschte oder benötigte Länge zu erreichen. Zu diesem Zweck kann der Bausatz auch mehrere Verlängerungseinheiten 12 mit unterschiedlichen festen Längen aufweisen.

Die Fig. 7 zeigt eine Messvorrichtung 13 mit einer Sensoreinheit 1 nach Fig. 1(d) und einer Kommunikationseinheit 6 nach Fig. 2(b) zwischen denen eine Teleskop-Verlängerungseinheit 12 nach Fig. 6(a) gekoppelt ist.

Die Fig. 8 zeigt die Messvorrichtung 13 mit einer Sensoreinheit 1 nach Fig. 1(d) und einer Kommunikationseinheit 6 nach Fig. 2(b) zwischen denen mehrere Teleskop-Verlängerungseinheiten 12 nach Fig. 6(b) gekoppelt sind.

Neben den hier gezeigten Ausführungen ist selbstverständlich jede andere beliebige Kombination der einzelnen Baukasteneinheiten möglich.

### Bezugszeichenliste

- 1: Sensoreinheit
- 2: Sensor
- 3: Sensorelektronik
- 4: Schaft
- 5: Flügelrad
- 6: Kommunikationseinheit
- 7: Kupplung
- 8: Kabel zwischen Sensoreinheit und Kommunikationseinheit
- 9: Kabel an Schnittstelle
- 10: Anzeigeeinheit
- 11: Handgriff
- 12: Verlängerungseinheit
- 13: Messvorrichtung
- 14: Smartphone
- 15: Kommunikationselektronik
- 16: Bluetooth-Modul
- 17: Zigbee-Modul
- 18: WLAN-Modul
- 19: Bus-Modul
- 20: Verarbeitungseinheit
- 21: Gehäuse
- 22: Computerprogrammprodukt
- 23: Teleskopanordnung

## Patentansprüche

1. Baukasten zum Bau einer Messvorrichtung (13), umfassend zumindest zwei Sensoreinheiten (1), die jeweils zur Messung unterschiedlicher Größen ausgestaltet sind, zumindest zwei Kommunikationseinheiten (6), die jeweils unterschiedliche Schnittstellen zur Datenübertragung aufweisen, wobei jede der Sensoreinheiten (1) mit jeder der Kommunikationseinheiten (6) des Baukastens über eine mechanische Kupplung (7) lösbar verbindbar ist und zumindest eine Verlängerungseinheit (12) mit einem Gehäuse (21), das beidseits mechanische Kupplungen (7) aufweist, an die wahlweise eine Sensoreinheit (1), eine Kommunikationseinheit (6) und/oder eine weitere Verlängerungseinheit (12) koppelbar ist, **dadurch gekennzeichnet, dass** das Gehäuse (21) eine Teleskopanordnung (23) aufweist, mit der die Verlängerungseinheit (12) in ihrer Längsausdehnung veränderbar ist.

2. Baukasten nach Anspruch 1, **dadurch gekennzeichnet, dass** der Baukasten zumindest eine Sensoreinheit (1) umfasst, die zur Messung von zumindest zwei unterschiedlichen Größen ausgestaltet ist und/oder dass der Baukasten zumindest eine Kommunikationseinheit (6) umfasst, die zumindest zwei unterschiedliche Schnittstellen zur Datenübertragung aufweist.

3. Baukasten nach Anspruch 1 oder 2, **dadurch gekennzeichnet, dass** die Schnittstellen der Kommunikationseinheiten (6) zur Herstellung einer drahtlosen und/oder drahtgebundenen Verbindung ausgestaltet sind, vorzugsweise wobei eine oder die drahtlosen Schnittstellen dazu eingerichtet ist/sind, um jeweils eine oder mehrere Drahtlosverbindungen ausgewählt aus der Gruppe aus WLAN (18), Bluetooth (16) und/oder Zigbee (17) herzustellen, und/oder wobei eine oder die drahtgebundenen Schnittstellen (19) als ein Anschluss für ein Datenübertragungskabel (9) oder als ein Datenübertragungskabel (9) ausgestaltet ist/sind.

4. Baukasten nach einem der Ansprüche 1 bis 3, **dadurch gekennzeichnet, dass** eine Sensorelektronik (3) in einem Gehäuse (21) der Sensoreinheit (1) und/oder in einem Gehäuse (21) der Kommunikationseinheit (6) angeordnet ist und/oder dass eine Kommunikationselektronik (15) in einem Gehäuse (21) der Sensoreinheit (1) und/oder in einem Gehäuse (21) der Kommunikationseinheit (6) angeordnet ist.

5. Baukasten nach einem der Ansprüche 1 bis 4, **dadurch gekennzeichnet, dass** die mechanische Kupplung (7) als Steckkupplung, Schraubkupplung, Rastverbindung, Klemmverbindung und/oder Reibverbindung ausgestaltet ist.

6. Baukasten nach einem der Ansprüche 1 bis 5, **dadurch gekennzeichnet, dass** jede durch den Baukasten zusammenbaubare Messvorrichtung (13) einen Handgriff (11) aufweist, insbesondere wobei der Handgriff (11) durch ein oder das Gehäuse (21) der Sensoreinheit (1) und/oder durch ein oder das Gehäuse (21) der Kommunikationseinheit (6) ausgestaltetet und/oder daran angeordnet ist.

7. Baukasten nach einem der Ansprüche 1 bis 6, **dadurch gekennzeichnet, dass** zumindest eine Kommunikationseinheit (6) und/oder zumindest eine Sensoreinheit (1) des Baukastens eine Anzeigeeinheit (10) zum Anzeigen eines Messwertes aufweist und/oder dass zumindest eine Kommunikationseinheit (6) und/oder zumindest eine Sensoreinheit (1) des Baukastens eine Verarbeitungseinheit (20) zur Messwertaufbereitung aufweist.

8. Baukasten nach einem der Ansprüche 1 bis 7, **dadurch gekennzeichnet, dass** die Sensoreinheiten (1) und die Kommunikationseinheiten (6) über eine Steckkupplung (7) miteinander lösbar verbindbar sind, wobei die Sensoreinheiten (1) einen Stecker und die Kommunikationseinheiten (6) eine zum Stecker korrespondierende Buchse aufweisen und/oder wobei die Kommunikationseinheiten (6) einen Stecker und die Sensoreinheiten (1) eine zum Stecker korrespondierende Buchse aufweisen.

9. Baukasten nach einem der Ansprüche 1 bis 8, **dadurch gekennzeichnet, dass** der Baukasten ein auf einem Datenverarbeitungsgerät (14) installierbares Computerprogrammprodukt (22), insbesondere eine App, umfasst, mittels welchem Computerprogrammprodukt eine Datenübertragung an das Datenverarbeitungsgerät und/oder eine Konfiguration einer aus dem Baukasten zusammengebauten Messvorrichtung (13), insbesondere der Sensoreinheit (1) und/oder der Kommunikationseinheit (6), durchführbar ist.

10. Baukasten nach einem der Ansprüche 1 bis 9 **dadurch gekennzeichnet, dass** die zumindest eine oder eine weitere Verlängerungseinheit (12) wenigstens eine zweipolige Verbindungsleitung zwischen den Kupplungen (7) mit drehsymmetrischen elektrischen Verbindungsmitteln, insbesondere einem Klinkenstecker und/oder einer Klinkenbuchse, verbunden ist.

## Claims

1. Assembly kit for constructing a measuring apparatus (13), comprising at least two sensor units (1), which are each fashioned for measuring different variables, at least two communication units (6), which each have different interfaces for data transmission, wherein each of the sensor units (1) is detachably connectable to each of the communication units (6) of the assembly kit by means of a mechanical coupling (7), and at least one extension unit (12) having a housing (21) having mechanical couplings (7) on both sides, to which mechanical couplings a sensor unit (1), a communication unit (6) and/or a further extension unit (12) is/are selectively couplable, **characterized in that** the housing (21) has a telescopic arrangement (23) by means of which the extension unit (12) is alterable in its longitudinal extent.

2. Assembly kit according to Claim 1, **characterized in that** the assembly kit comprises at least one sensor unit (1) fashioned for measuring at least two different variables, and/or **in that** the assembly kit comprises at least one communication unit (6) having at least two different interfaces for data transmission.

3. Assembly kit according to Claim 1 or 2, **characterized in that** the interfaces of the communication units (6) are fashioned for making a wireless and/or wired connection, preferably wherein a or the wireless interface(s) is/are set up to make one or more respective wireless connection(s) selected from the group comprising WLAN (18), Bluetooth (16) and/or Zigbee (17), and/or wherein a or the wired interface(s) (19) is/are fashioned as a connection for a data transmission cable (9) or as a data transmission cable (9).

4. Assembly kit according to one of Claims 1 to 3, **characterized in that** sensor electronics (3) are arranged in a housing (21) of the sensor unit (1) and/or in a housing (21) of the communication unit (6), and/or **in that** communication electronics (15) are arranged in a housing (21) of the sensor unit (1) and/or in a housing (21) of the communication unit (6).

5. Assembly kit according to one of Claims 1 to 4, **characterized in that** the mechanical coupling (7) is fashioned as a plug-in coupling, screw coupling, latching connection, clamping connection and/or friction joint.

6. Assembly kit according to one of Claims 1 to 5, **characterized in that** each measuring apparatus (13) assemblable by the assembly kit has a handle (11), in particular wherein the handle (11) is fashioned by and/or arranged on a or the housing (21) of the sensor unit (1) and/or a or the housing (21) of the communication unit (6).

7. Assembly kit according to one of Claims 1 to 6, **characterized in that** at least one communication unit (6) and/or at least one sensor unit (1) of the assembly kit has/have a display unit (10) for displaying a measured value, and/or **in that** at least one communication unit (6) and/or at least one sensor unit (1) of the assembly kit has/have a processing unit (20) for measured value conditioning.

8. Assembly kit according to one of Claims 1 to 7, **characterized in that** the sensor units (1) and the communication units (6) are detachably connectable to one another by means of a plug-in coupling (7), wherein the sensor units (1) have a plug and the communication units (6) have a socket corresponding to the plug, and/or wherein the communication units (6) have a plug and the sensor units (1) have a socket corresponding to the plug.

9. Assembly kit according to one of Claims 1 to 8, **characterized in that** the assembly kit comprises a computer program product (22), in particular an app, installable on a data processing device (14), by means of which computer program product a data transmission to the data processing device and/or a configuration of a measuring apparatus (13), in particular the sensor unit (1) and/or the communication unit (6), assembled from the assembly kit is performable.

10. Assembly kit according to one of Claims 1 to 9, **characterized in that** the at least one extension unit (12) or a further extension unit (12) at least one two-pole connecting line between the couplings (7) is connected to rotationally symmetrical electrical connecting means, in particular a jack plug and/or a jack socket.

## Revendications

1. Système modulaire pour la construction d'un dispositif de mesure (13), comprenant au moins deux unités de détection (1) qui sont conçues chacune pour la mesure de grandeurs différentes, au moins deux unités de communication (6) qui présentent chacune des interfaces différentes pour la transmission de données, chacune des unités de détection (1) pouvant être reliée à chacune des unités de communication (6) du système modulaire par un accouplement mécanique (7) et au moins une unité de rallonge (12) avec un boîtier (21) qui présente des deux côtés des accouplements mécaniques (7) pouvant être accouplée au choix à une unité de détection (1), à une unité de communication (6) et/ou à une autre unité de rallonge (12), **caractérisé en ce que** le boîtier (21) présente un dispositif télescopique (23) avec lequel l'unité de rallonge (12) peut être modifiée dans son extension longitudinale.

2. Système modulaire selon la revendication 1, **caractérisé en ce que** ce système modulaire comprend au moins une unité de détection (1) qui est conçue pour la mesure d'au moins deux grandeurs différentes et/ou que ce système modulaire comprend au moins une unité de communication (6) qui présente au moins deux interfaces différentes pour la transmission de données.

3. Système modulaire selon la revendication 1 ou 2, **caractérisé en ce que** les interfaces des unités de communication (6) sont conçues pour l'établissement d'une liaison sans fil et/ou filaire, de préférence une ou les interface(s) sans fil étant équipée(s) pour établir chacune une ou plusieurs liaisons sans fil sélectionnées parmi le groupe comprenant le WLAN (18), Bluetooth (16) et/ou Zigbee (17), et/ou une ou les interface(s) sans fil (19) étant configurée(s) comme un branchement pour un câble de transmission de données (9) ou comme un câble de transmission de données (9).

4. Système modulaire selon une des revendications 1 à 3, **caractérisé en ce qu'**un système électronique de détection (3) est disposé dans un boîtier (21) de l'unité de détection (1) et/ou dans un boîtier (21) de l'unité de communication (6) et/ou qu'un système électronique de communication (15) est disposé dans un boîtier (21) de l'unité de détection (1) et/ou dans un boîtier (21) de l'unité de communication (6).

5. Système modulaire selon une des revendications 1 à 4, **caractérisé en ce que** l'accouplement mécanique (7) est configuré comme un accouplement à enfichage, un accouplement à vis, une liaison à encliquetage, une liaison à serrage et/ou une liaison à friction.

6. Système modulaire selon une des revendications 1 à 5, **caractérisé en ce que** chaque dispositif de mesure (13) pouvant être assemblé par le biais du système modulaire présente une poignée (11), en particulier dans lequel la poignée (11) est constituée par un ou le boîtier (21) de l'unité de détection (1) et/ou par un ou le boîtier (21) de l'unité de communication (6) et/ou est disposée dessus.

7. Système modulaire selon une des revendications 1 à 6, **caractérisé en ce qu'**au moins une unité de communication (6) et/ou au moins une unité de détection (1) du système modulaire présentent une unité d'affichage (10) pour l'affichage d'une valeur de mesure et/ou qu'au moins une unité de communication (6) et/ou au moins une unité de détection (1) du système modulaire présentent une unité de traitement (20) pour le traitement de valeurs de mesure.

8. Système modulaire selon une des revendications 1 à 7, **caractérisé en ce que** les unités de détection (1) et les unités de communication (6) peuvent être reliées entre elles de façon amovible par un accouplement à enfichage (7), dans lequel les unités de détection (1) présentent une fiche et les unités de communication (6) une prise correspondant à la fiche et/ou dans lequel les unités de communication (6) présentent une fiche et les unités de détection (1) une prise correspondant à la fiche.

9. Système modulaire selon une des revendications 1 à 8, **caractérisé en ce que** ce système modulaire comprend un programme informatique (22) pouvant être installé sur un appareil de traitement de données (14), en particulier une application, au moyen duquel programme informatique une transmission de données à l'appareil de transmission de données et/ou une configuration d'un dispositif de mesure (13) assemblé à partir du système modulaire, en particulier de l'unité de détection (1) et/ou de l'unité de communication (6), peuvent être réalisées.

10. Système modulaire selon une des revendications 1 à 9, **caractérisé en ce que** l'au moins une ou une autre unité de rallonge (12), au moins un câble de liaison bipolaire, est reliée entre les accouplements (7) avec des moyens de liaison électrique symétriques en rotation, en particulier une fiche jack et/ou une prise jack.
